# EUROPÄISCHE PATENTSCHRIFT

(11) **EP 2 170 643 B1**
(45) Veröffentlichungstag und Bekanntmachung des Hinweises auf die Patenterteilung: **22.12.2010**
(21) Anmeldenummer: 08758915.6
(22) Anmeldetag: 31.05.2008
(51) Int. Cl.: B60K 35/00

(54) **ANZEIGEEINRICHTUNG FÜR EIN FAHRZEUG**
INDICATOR DEVICE FOR A VEHICLE
DISPOSITIF D'AFFICHAGE POUR UN VÉHICULE AUTOMOBILE

(30) Priorität: 19.07.2007 DE 102007033568
(43) Veröffentlichungstag der Anmeldung: 07.04.2010
(73) Patentinhaber: Volkswagen Aktiengesellschaft, 38436 Wolfsburg (DE)
(72) Erfinder: WENGELNIK, Heino, 38442 Wolfsburg (DE); SPIERLING, Gerd, 38448 Wolfsburg (DE); THOM, Mathias, 38106 Braunschweig (DE); KITSCHKE, Roland, 38518 Gifhorn (DE)
(86) Internationale Anmeldenummer: PCT/EP2008/004345
(87) Internationale Veröffentlichungsnummer: WO 2009/010126

(56) Entgegenhaltungen:
- DE-A1- 3 916 471
- DE-A1- 10 153 100
- DE-A1-102004 049 857
- FR-A- 2 760 413

## Beschreibung

Die vorliegende Erfindung betrifft eine Anzeigeinrichtung gemäss dem Oberbegriff des Anspruchs 1.

Die Anzahl von Informationen, die einem Fahrzeugführer aufgrund der steigenden Anzahl von Komforteinrichtungen angezeigt werden steigt ständig. Zu den Komforteinrichtungen, die in modernen Fahrzeugen eingesetzt werden zählen Navigationseinrichtungen, Telekommunikationseinrichtungen, Fahrerassistenzsystemen und Wamhinweise zu eine Vielzahl von Einrichtungen des Fahrzeugs und zu Umgebungsbedingungen. In vielen Fahrzeugen werden deshalb so genannte Multifunktions-Bedien- und Anzeigeeinrichtungen eingesetzt. Herkömmlicherweise ist das Display solcher Multifunktions-Bedien- und Anzeigeeinrichtungen in der Mittelkonsole angeordnet. Des Weiteren weisen solche Fahrzeuge ein so genanntes Kombiinstrument nahe des primären Sichtfeldes des Fahrzeugführers auf, welches dynamische Informationen und Überwachungsinformationen anzeigt, auf welche der Fahrzeugführer ggfs. unmittelbar reagieren soll. Neuerdings weisen die Kombiinstrumente neben herkömmlichen Rundinstrumenten auch frei programmierbare Displays auf, welche Informationen einer Navigationseinrichtung, einer Telekommunikationseinrichtung und insbesondere der Fahrerassistenzsysteme darstellen. Die Darstellung umfassender Informationen im Kombiinstrument des Fahrzeugs hat den Vorteil, dass der Fahrzeugführer zur Wahrnehmung der dargestellten Informationen seinen Blick nur geringfügig vom Fahrgeschehen abwenden muss.

Wenn zu umfassende Informationen im Kombiinstrument dargestellt werden, ergibt sich allerdings das Problem, dass der Fahrzeugführer die gewünschte Information nicht mehr schnell und intuitiv erfassen kann und von der Informationsfülle auf dem Display des Kombiinstruments vom Fahren abgelenkt wird. Aus diesem Grund wird an neuen Konzepten gearbeitet, wie Informationen mittels Anzeigeeinrichtungen in einem Fahrzeug, insbesondere mittels des Kombiinstruments, in der Nähe des Blickfeldes des Fahrzeugführers dargestellt werden können. Bei der Informationsdarstellung ist es besonders wichtig, dass der Fahrzeugführer die Informationen so schnell und intuitiv wie möglich aufnehmen kann.

Aus der EP 1 160 116 A2 ist ein Kombiinstrument für ein Kraftfahrzeug mit einer Lichtleitplatte bekannt, in die Umgebungslicht von innerhalb oder außerhalb des Kraftfahrzeugs eingekoppelt wird, in der das eingekoppelte Umgebungslicht durch Totalreflektion an die vom Betrachter abgewandte Seite eines Displays geführt wird, und die an der vom Betrachter abgewandten Seite des Displays zur dortigen Auskoppelung des Umgebungslichts aus der Lichtleitplatte und zur Einkoppelung des Umgebungslichts in das Display eine Beschichtung oder eine Struktur aufweist.

Die DE 101 53 100 A1 offenbart eine Einrichtung nach dem Oberbegriff des Anspruchs 1.

Es ist die Aufgabe der vorliegenden Erfindung, eine Anzeigeeinrichtung der eingangs genannten Art bereitzustellen, mit der Informationen so angezeigt werden können, dass ein Betrachter im Fahrzeug sie schnell erfassen kann.

Diese Aufgabe wird erfindungsgemäß durch eine Anzeigeeinrichtung mit den Merkmalen des Anspruchs 1 gelöst. Vorteilhafte Aus- und Weiterbildungen ergeben sich aus den Unteransprüchen.

Es hat sich herausgestellt, dass der Betrachter die von einer Anzeigeeinrichtung dargestellten Informationen schneller und intuitiver erfassen kann, wenn die Anzeigeeinrichtung dreidimensionale Strukturen oder Darstelllungen aufweist. Aus diesem Grund werden bei vielen Anzeigeeinrichtungen weiterhin herkömmliche mechanische Rundinstrumente eingesetzt. Andererseits bieten frei programmierbare Darstellungseinheiten den Vorteil, dass die Informationen sehr viel variabler und der jeweiligen Situation des Fahrzeugs angepasst angezeigt werden können. Derartige Darstellungseinheiten weisen normalerweise jedoch keine dreidimensionalen Darstellungselemente auf. Die erfindungsgemäß vorgesehenen Lichtauskoppelstrukturen der Licht leitenden Deckscheibe verleihen der Anzeigeeinrichtung die Möglichkeit, der Informationsdarstellung einen dreidimensionalen Effekt zu verleihen.

Gemäß einer-bevorzugten Ausgestaltung der erfindungsgemäßen Anzeigeeinrichtung sind die Lichtauskoppelstrukturen Gravuren in der Deckscheibe. Die Gravuren können in der der Darstellungseinheit zugewandten oder abgewandten Seite oder auf beiden Seiten der Deckscheibe vorgesehen sein. Ferner können sie zusätzlich oder alternativ innerhalb der Deckscheibe angeordnet sein.

Gemäß einer anderen Ausgestaltung der erfindungsgemäßen Anzeigeeinrichtung sind die Lichtauskoppelstrukturen von Hohlräumen in der Deckscheibe gebildet. In diesem Fall kann die Anzeigeeinrichtung Mittel zum Befüllen und Entleeren der Hohlräume mit einer Flüssigkeit aufweisen. Die Flüssigkeit kann je nach gewünschtem Effekt im Wesentlichen transparent oder farbig sein, sie kann einen gewünschten Brechungsindex aufweisen sowie andere Merkmale besitzen, welche die optischen Eigenschaften der Deckscheibe mit den flüssigkeitsgefüllten Hohlräumen beeinflussen. Beispielsweise kann ein mit transparenter Flüssigkeit gefüllter Hohlraum wie eine ebene, ungebrochene Fläche wirken, während im entleerten Zustand des Hohlraums eine Lichtbrechung und somit ein räumlicher Effekt auftritt.

Die Lichtauskoppelstrukturen können insbesondere eine Skaleneinteilung aufweisen, die z. B. von zwei konzentrischen Kreisen oder Teilkreisen gebildet ist. Gleichermaßen kann auch nur ein Kreis mit Skalenstrichen vorgesehen sein.

Die erfindungsgemäße Anzeigeeinrichtung weist eine Steuereinheit zum Steuern der Informationsanzeige durch die Darstellungseinheit auf. Ferner ist zumindest eine mit der Steuereinheit gekoppelte Lichtquelle vorgesehen, die Licht in Richtung der Lichteinkoppelfläche der Deckscheibe emittiert. Auf diese Weise ist mit der Steuereinheit die Lichtquelle in Abhängigkeit von der von der Darstellungseinheit angezeigten Information ein- und ausschaltbar.

Die Lichtauskoppelstrukturen können so ausgebildet sein, dass sie bei ausgeschalteter Lichtquelle für den Betrachter nicht sichtbar sind. Bei eingeschalteter Lichtquelle wird bei den Lichtauskoppelstrukturen Licht in Richtung des Betrachters ausgekoppelt, so dass die Lichtauskoppelstrukturen die Informationsanzeige auf der Darstellungseinheit dreidimensional ergänzt. Die Informationsanzeige auf der Darstellungseinheit kann in diesem Fall mit den Lichtauskoppelstrukturen korrespondieren, d. h. eine bestimmte Darstellungsart wird durch die Darstellung der Darstellungseinheit und die Lichtauskoppelstrukturen gebildet. Ferner können die Lichtauskoppelstrukturen gleichzeitig auch entsprechend von der Darstellungseinheit wiedergegeben werden. Dabei kann die Geometrie der Lichtauskoppelstrukturen in identischer Größe, vergrößert, verkleinert oder ortsverschoben und/oder farbverschoben dargestellt werden.

Die Lichtquelle kann weißes, farbiges oder Licht verschiedener Farben, insbesondere rotes, grünes und blaues Licht einkoppeln. Ferner kann gemäß einer anderen Ausgestaltung die Lichtquelle ultraviolettes Licht einkoppeln.

Gemäß einer Weiterbildung der erfindungsgemäßen Anzeigeeinrichtung weist diese mehrere Licht leitende Deckscheiben mit Lichtauskoppelstrukturen auf. Auf diese Weise kann der dreidimensionale Effekt durch mehrfach übereinander gelegene Ebenen mit Lichtauskoppelstrukturen verstärkt werden.

Gleichermaßen lässt sich der dreidimensionale Effekt über die Stärke einer eingebrachten Gravur verstärken. Je tiefer und breiter z. B. eine Gravur ausgeführt ist, desto heller leuchten die Lichtauskoppelstrukturen. Ferner lassen sich auf diese Weise Verläufe und damit stärkere räumliche Effekte erzeugen. Gemäß einer bevorzugten Ausgestaltung der erfindungsgemäßen Anzeigeeinheit ist die Darstellungseinheit ein Display, insbesondere ein Flüssigkristalldisplay, insbesondere ein Farbdisplay in TFT-(thin-film transistor)-Technik. Es können jedoch auch beliebige andere Displaytechniken eingesetzt werden.

Des Weiteren kann die Darstellungseinheit ein mechanisches Rundinstrument oder mehrere Rundinstrumente umfassen.

Die Erfindung wird nun an Hand eines Ausführungsbeispiels mit Bezug zu den Zeichnungen erläutert.

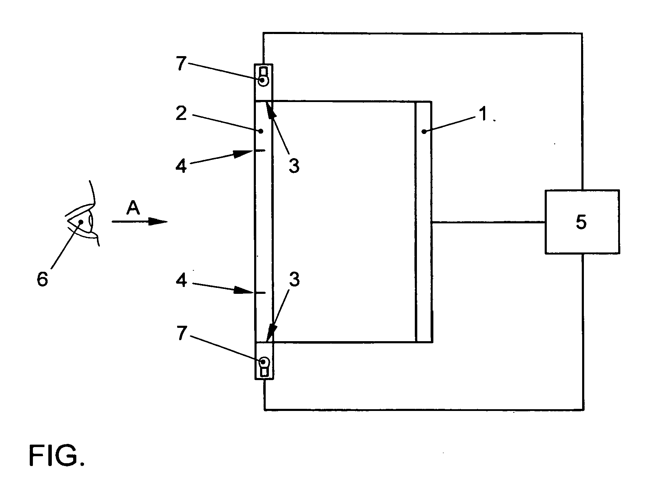

Die Figur zeigt schematisch den Aufbau eines Ausführungsbeispiels der erfindungsgemäßen Anzeigeeinrichtung im Querschnitt.

Die Anzeigeeinrichtung, die insbesondere ein Kombiinstrument eines Kraftfahrzeugs sein kann, weist als Einheit zur Darstellung von Informationen ein an sich bekanntes Display 1 auf, welches mit einer Steuereinheit 5 verbunden ist. Bei dem Display kann es sich um ein Flüssigkristalldisplay, ein TFT-(thin-film transistor)-Display oder ein Display in einer anderen geeigneten Technik handeln. Neben dem Display sind zwei herkömmliche mechanische Rundinstrumente angeordnet. Das eine dieser Rundinstrumente dient der Anzeige der Motordrehzahl, das andere Rundinstrument dient der Anzeige des Tankinhalts und der Kühlwassertemperatur.

Die Anzeige des Displays 1 kann variabel und situationsabhängig sowie in Abhängigkeit von Eingaben des Nutzers erfolgen. Zum einen dient das Display 1 der Geschwindigkeitsanzeige, welche teilweise durch ein Rundinstrument realisiert wird, das von dem Display 1 angezeigt wird. Zum anderen können innerhalb des Rundinstruments des Displays 1 und seitlich neben dem Rundinstrument weitere das Fahrzeug betreffende oder andere Informationen angezeigt werden. Beispielsweise kann der Bereich innerhalb des von dem Display 1 angezeigten Rundinstruments für die Anzeige eines Navigationssystems oder für Infotainmentfunktionen dienen. Falls für einen bestimmten Anzeigeinhalt ein besonders großer Anzeigebereich auf dem Display 1 benötigt wird, kann das Rundinstrument für die Geschwindigkeitsanzeige auf dem Display 1 auch verschwinden und statt dessen die Geschwindigkeit nur als digitaler Zahlenwert angezeigt werden. In diesem Fall steht, beispielsweise für die Karte eines Navigationssystems, ein sehr viel größerer Anzeigebereich auf dem Display 1 zur Verfügung.

Vor dem Display 1, d. h. zwischen einem Betrachter 6 und dem Display 1, ist eine Deckscheibe 2 angeordnet. Diese Deckscheibe 2 ist von dem Display 1 beabstandet. Sie besteht aus einem transparenten Material, so dass der Betrachter 6 in Betrachtungsrichtung A durch die Deckscheibe 2 das Display 1 und gegebenenfalls auch die seitlich daneben angeordneten mechanischen Rundinstrumente betrachten kann. Die Deckscheibe 2 ist Licht leitend ausgebildet und weist z. B. am oberen und unteren Rand Lichteinkoppelflächen 3 auf. Benachbart zu diesen Lichteinkoppelflächen 3 sind z. B. als Leuchtdioden ausgebildete Lichtquellen 7 angeordnet, deren Licht in Richtung der Lichteinkoppelflächen 3 emittiert wird, wenn sie eingeschaltet sind. Die Lichtquellen 7 sind auch mit dem Steuergerät 5 gekoppelt, so dass sie von dem Steuergerät ein- und ausgeschaltet werden können.

Die Lichtquellen 7 können so ausgebildet sein, dass sie weißes Licht, farbiges Licht und/oder ultraviolettes Licht emittieren und in die Lichteinkoppelflächen 3 einkoppeln. Ferner können jeweils oben und unten mehrere Lichtquellen vorgesehen sein, die rotes, grünes und blaues Licht emittieren und in die Lichteinkoppelflächen 3 einkoppeln. Die einzelnen Lichtquellen werden dabei von dem Steuergerät 5 gegebenenfalls so angesteuert, dass in Abhängigkeit von der Anzeige des Displays 1 Licht unterschiedlicher Farbe in die Deckscheibe 2 eingekoppelt wird.

Des Weiteren weist die Deckscheibe 2 Lichtauskoppelstrukturen 4 auf. Diese Lichtauskoppelstrukturen 4 sind Gravuren, die auf der Vorderseite, auf der Rückseite oder beidseitig in die Deckscheibe 2 und/oder innerhalb der Deckscheibe 2 eingebracht sind. Beispielsweise sind zwei gestrichelte konzentrische Kreise in die Deckscheibe 2 eingraviert. Die Striche der Kreise stellen dabei eine Skalierung dar. Die Stärke und die Tiefe der Gravur ist so gewählt, dass der Betrachter 6 beim Betrachten des Displays 1 die Gravur nicht oder kaum wahrnimmt, wenn kein Licht über die Lichteinkoppelflächen 3 eingekoppelt wird. Wenn jedoch Licht über die Lichteinkoppelflächen 3 mittels der Leuchtdioden 7 eingekoppelt wird, sind die Gravuren für den Betrachter deutlich sichtbar. Auf Grund der Beabstandung der Deckscheibe 2 von dem Display 1 ergibt sich ein dreidimensionaler Effekt, da die Gravur deutlich sichtbar vor dem Display 1 erscheint.

Beim Betrieb der Anzeigeeinrichtung schaltet die Steuereinheit 5 die Leuchtdioden 7 in Abhängigkeit von der auf dem Display 1 angezeigten Informationen ein und aus. Wenn z. B. auf dem Display 1 Elemente eines Rundinstruments für die Geschwindigkeitsanzeige angezeigt werden, werden die Lichtquellen 7 eingeschaltet, so dass die Lichtauskoppelstrukturen 4 leuchten. Die Anzeige auf dem Display 1 korrespondiert mit der bzw. ergänzt in diesem Fall die Darstellung mittels der Lichtauskoppelstrukturen 4. Sind z. B. zwei konzentrische Kreise mit Skalierung in die Deckscheibe 2 eingraviert, kann ein auf dem Display 2 dargestellter Zeiger so dargestellt werden, dass er für den Betrachter 6 radial auf die Skala der gravierten Kreise zeigt. Ferner können auch auf dem Display 2 die konzentrischen Kreise mit der Skalierung so angezeigt werden, dass sie für den Betrachter 6 direkt hinter den Kreisen der Gravur erscheinen. Die weiteren, nicht von den Lichtauskoppelstrukturen 4 der Deckscheibe 2 erforderlichen Elemente des Rundinstruments der Geschwindigkeitsanzeige werden auf dem Display dargestellt. Beispielsweise können die der Skala zugeordneten Zahlenwerte für die Geschwindigkeit vom Display dargestellt werden.

Gemäß einem weiteren (nicht dargestellten) Ausführungsbeispiel weist die Anzeigeeinrichtung mehrere Deckscheiben 2 mit Lichtauskoppelstrukturen 4 auf. Sie bilden mehrfach übereinander gelegte Ebenen, welche den dreidimensionalen Effekt verstärken.

Gemäß einem noch weiteren (nicht dargestellten) Ausführungsbeispiel handelt es sich bei den Lichtauskoppelstrukturen um Hohlräume in der Deckscheibe, welche mit Flüssigkeit befüllt werden können. In diesem Fall weist die Deckscheibe 2 eine Kanalstruktur auf, die mit einem Flüssigkeitsein- bzw. -auslass verbunden ist, welcher mit einer Pumpe gekoppelt ist, über die die Flüssigkeit in die Hohlräume hinein und aus den Hohlräumen herausgepumpt werden kann. Wird beispielsweise eine transparente Flüssigkeit verwendet, wirken die mit dieser Flüssigkeit gefüllten Hohlräume wie ebene, ungebrochene Fläche. Sind die Hohlräume nicht mit der Flüssigkeit gefüllt, ergibt sich eine Lichtbrechung bei der Betrachtung des Displays 1 durch die Deckscheibe 2, wodurch ein räumlicher Effekt herbeigeführt wird.

Schließlich können auch andere Lichtauskoppelstrukturen im Inneren der Deckscheibe 2 vorgesehen sein.

### Bezugszeichenliste

- 1: Display
- 2: Deckscheibe
- 3: Lichteinkoppelfläche
- 4: Lichtauskoppelstrukturen
- 5: Steuergerät
- 6: Betrachter
- 7: Lichtquellen

## Patentansprüche

1. Anzeigeeinrichtung für ein Fahrzeug
- mit einer Einheit (1) zur Darstellung von Informationen,
- mit einer zumindest zum Teil transparenten Deckscheibe (2), die vor der Darstellungseinheit (1) angeordnet ist, wobei die Deckscheibe (2) Licht leitend ausgebildet ist und eine Lichteinkoppelfläche (3) und Lichtauskoppelstrukturen (4) aufweist,
- mit einer Steuereinheit (5) zum Steuern der Informationsanzeige auf der Darstellungseinheit (1)
- und mit zumindest einer mit der Steuereinheit (5) gekoppelten Lichtquelle (7), die Licht in Richtung der Einkoppelfläche (3) emittiert,
**dadurch gekennzeichnet,**
**dass** mit der Steuereinheit (5) die Lichtquelle (7) in Abhängigkeit von der von der Darstellungseinheit (1) angezeigten Information ein- und ausschaltbar ist.

2. Anzeigeeinrichtung nach Anspruch 1,
**dadurch gekennzeichnet,**
**dass** die Lichtauskoppelstrukturen (4) Gravuren in der Deckscheibe (2) sind.

3. Anzeigeeinrichtung nach Anspruch 2,
**dadurch gekennzeichnet,**
**dass** die Gravuren in der der Darstellungseinheit (1) zugewandten Seite der Deckscheibe (2) sind.

4. Anzeigeeinrichtung nach Anspruch 2 oder 3,
**dadurch gekennzeichnet,**
**dass** die Gravuren in der der Darstellungseinheit (1) abgewandten Seite der Deckscheibe (2) sind.

5. Anzeigeeinrichtung nach einem der vorstehenden Ansprüche,
**dadurch gekennzeichnet,**
**dass** die Lichtauskoppelstrukturen (4) innerhalb der Deckscheibe (2) angeordnet sind.

6. Anzeigeeinrichtung nach Anspruch 1,
**dadurch gekennzeichnet,**
**dass** die Lichtauskoppelstrukturen (4) von Hohlräumen in der Deckscheibe (2) gebildet sind.

7. Anzeigeeinrichtung nach Anspruch 6,
**dadurch gekennzeichnet,**
**dass** die Anzeigeeinrichtung Mittel zum Befüllen und Entleeren der Hohlräume mit einer Flüssigkeit aufweist.

8. Anzeigeeinrichtung nach einem der vorstehenden Ansprüche,
**dadurch gekennzeichnet,**
**dass** die Lichtauskoppelstrukturen (4) eine Skaleneinteilung aufweisen.

9. Anzeigeeinrichtung nach einem der vorstehenden Ansprüche,
**dadurch gekennzeichnet,**
**dass** die Lichtauskoppelstrukturen (4) zwei konzentrische Kreise oder Teilkreise umfassen.

10. Anzeigeeinrichtung nach Anspruch 1,
**dadurch gekennzeichnet,**
**dass** die Lichtquelle (7) weißes Licht, farbiges Licht, Licht verschiedener Farben oder ultraviolettes Licht in die Lichteinkoppelfläche (3) einkoppelt.

11. Anzeigeeinrichtung nach einem der vorstehenden Ansprüche,
**dadurch gekennzeichnet,**
**dass** die Anzeigeeinrichtung mehrere Licht leitende Deckscheiben (2) mit Lichtauskoppelstrukturen (4) aufweist.

12. Anzeigeeinrichtung nach einem der vorstehenden Ansprüche,
**dadurch gekennzeichnet,**
**dass** die Darstellungseinheit (1) ein Display oder ein mechanisches Rundinstrument ist.

## Claims

1. Indicator device for a vehicle,
- comprising a unit (1) for displaying information,
- comprising an at least partially transparent cover plate (2) which is arranged in front of the display unit (1), the cover plate (2) being of light-guiding design and having a light-coupling surface (3) and light-outcoupling structures (4),
- comprising a control unit (5) for controlling the indication of information on the display unit (1),
- and comprising at least one light source (7) which is coupled to the control unit (5) and emits light in the direction of the coupling surface (3),
**characterized in that** the control unit (5) can be used to switch the light source (7) on and off as a function of the information indicated by the display unit (1).

2. Indicator device according to Claim 1, **characterized in that** the light-outcoupling structures (4) are engravings in the cover plate (2).

3. Indicator device according to Claim 2, **characterized in that** the engravings are in the side of the cover plate (2) facing the display unit (1).

4. Indicator device according to Claim 2 or 3, **characterized in that** the engravings are in the side of the cover plate (2) averted from the display unit (1).

5. Indicator device according to one of the preceding claims, **characterized in that** the light-outcoupling structures (4) are arranged inside the cover plate (2).

6. Indicator device according to Claim 1, **characterized in that** the light-outcoupling structures (4) are formed by cavities in the cover plate (2).

7. Indicator device according to Claim 6, **characterized in that** the indicator device has means for filling and emptying the cavities with and of a liquid.

8. Indicator device according to one of the preceding claims, **characterized in that** the light-outcoupling structures (4) have scale marks.

9. Indicator device according to one of the preceding claims, **characterized in that** the light-outcoupling structures (4) comprise two concentric circles or partial circles.

10. Indicator device according to Claim 1, **characterized in that** the light source (7) couples white light, coloured light, light of various colours or ultraviolet light into the light-coupling surface (3).

11. Indicator device according to one of the preceding claims, **characterised in that** the indicator device has a plurality of light-guiding cover plates (2) with light-outcoupling structures (4).

12. Indicator device according to one of the preceding claims, **characterized in that** the display unit (1) is a display or a round mechanical instrument.

## Revendications

1. Dispositif d'affichage pour un véhicule
- comprenant une unité (1) pour représenter des informations,
- comprenant une plaque de protection (2) au moins partiellement transparente qui est disposée devant l'unité de représentation (1), la plaque de protection (2) étant réalisée de façon à être conductrice de lumière et présentant une surface d'injection de lumière (3) et des structures de sortie de la lumière (4),
- comprenant une unité de commande (5) pour commander l'affichage d'informations sur l'unité de représentation (1),
- et comprenant au moins une source de lumière (7) connectée avec l'unité de commande (5), laquelle émet de la lumière en direction de la surface d'injection de lumière (3),
**caractérisé en ce que** la source de lumière (7) peut être mise en marche et arrêtée avec l'unité de commande (5) en fonction des informations affichées par l'unité de représentation (1).

2. Dispositif d'affichage selon la revendication 1, **caractérisé en ce que** les structures de sortie de la lumière (4) sont des gravures dans la plaque de protection (2).

3. Dispositif d'affichage selon la revendication 2, **caractérisé en ce que** les gravures se trouvent dans le côté de la plaque de protection (2) qui fait face à l'unité de représentation (1).

4. Dispositif d'affichage selon la revendication 2 ou 3, **caractérisé en ce que** les gravures se trouvent dans le côté de la plaque de protection (2) qui est à l'opposé de l'unité de représentation (1).

5. Dispositif d'affichage selon l'une des revendications précédentes, **caractérisé en ce que** les structures de sortie de la lumière (4) sont disposées à l'intérieur de la plaque de protection (2).

6. Dispositif d'affichage selon la revendication 1, **caractérisé en ce que** les structures de sortie de la lumière (4) sont formées par des espaces creux dans la plaque de protection (2).

7. Dispositif d'affichage selon la revendication 6, **caractérisé en ce que** le dispositif d'affichage présente des moyens pour remplir et vider les espaces creux avec un liquide.

8. Dispositif d'affichage selon l'une des revendications précédentes, **caractérisé en ce que** les structures de sortie de la lumière (4) présentent une graduation.

9. Dispositif d'affichage selon l'une des revendications précédentes, **caractérisé en ce que** les structures de sortie de la lumière (4) comprennent deux cercles ou cercles partiels concentriques.

10. Dispositif d'affichage selon la revendication 1, **caractérisé en ce que** la source de lumière (7) injecte de la lumière blanche, de la lumière colorée, de la lumière de différentes couleurs ou de la lumière ultraviolette dans la surface d'injection de lumière (3).

11. Dispositif d'affichage selon l'une des revendications précédentes, **caractérisé en ce que** le dispositif d'affichage présente plusieurs plaques de protection (2) conduisant la lumière munies de structures de sortie de la lumière (4).

12. Dispositif d'affichage selon l'une des revendications précédentes, **caractérisé en ce que** l'unité de représentation (1) est un afficheur ou un instrument rond mécanique.
